# EUROPÄISCHE PATENTSCHRIFT

(11) **EP 3 524 446 B1**
(45) Veröffentlichungstag und Bekanntmachung des Hinweises auf die Patenterteilung: **09.03.2022**
(21) Anmeldenummer: 19150134.5
(22) Anmeldetag: 03.01.2019
(51) Int. Cl.: B60C 13/00, B60C 11/00, B29D 30/06

(54) **FAHRZEUGREIFEN AUFWEISEND EINEN LAUFSTREIFEN MIT VULKANETTE UND HERSTELLUNGSVERFAHREN**
TYRE COMPRISING A TREAD WITH VULCANISED MARKING AND MANUFACTURING METHOD
PNEUMATIQUES DE VÉHICULE COMPRENANT UNE BANDE DE ROULEMENT À ÉTIQUETTE EN CAOUTCHOUC ET SON PROCÉDÉ DE FABRICATION

(30) Priorität: 09.02.2018 DE 102018202062
(43) Veröffentlichungstag der Anmeldung: 14.08.2019
(73) Patentinhaber: Continental Reifen Deutschland GmbH, 30165 Hannover (DE)
(72) Erfinder: Behr, Ulrich, 30167 Hannover (DE)
(74) Vertreter: Continental Corporation

(56) Entgegenhaltungen:
- EP-A1- 0 667 251
- EP-A1- 1 676 692
- EP-A2- 2 921 322
- WO-A1-2010/106112
- FR-A1- 2 996 798
- JP-A- 2002 248 911
- JP-A- 2009 107 484
- US-A1- 2006 273 148

## Beschreibung

Die Erfindung betrifft zwei Verfahren zur Herstellung eines Fahrzeugreifens aufweisend eine äußere Oberfläche, wobei die äußere Oberfläche eine Vulkanette aufweist.

Bekannt sind Fahrzeugreifen, insbesondere Fahrzeugluftreifen, die an ihrer äußeren Oberfläche Bezeichnungen aufweisen.

"Bezeichnungen" umfassen dabei Firmennamen, Firmenlogos, Farbkennzeichnungen, Informationsdaten, Identifikationscodes, optoelektronisch lesbare Codes, Schraffuren, etc. Eine Bezeichnung kann auch eine einfarbige Fläche darstellen. Die Bezeichnung kann einfarbig oder mehrfarbig ausgeführt sein.

Aus der JP 8199005 A ist es bekannt, im Bereich des Laufstreifens einen umlaufenden Streifen aus farbigem Gummi anzubringen. Das Einbringen einer solchen zusätzlichen farbigen Gummimischung ist allerdings aufwändig und kostenintensiv. Zudem ist eine kleinteilige Gestaltung aus vielen kleinen farbigen Bereichen, gegebenenfalls mit unterschiedlicher Farbigkeit der Bezeichnung nicht oder nur mit einem sehr hohen Aufwand möglich.

Aus der DE 20 2006 002 539 U1 ist es bekannt, dass die Lauffläche des Reifens eine Beschriftung durch Verwendung von entsprechend gestalteten Profilelementen aufweist. Diese können positiv (erhaben) oder negativ (in die Lauffläche eingeschnitten) sein. Hierbei ist nachteilig, dass eine Vielzahl an kleinteiligen Erhebungen oder Vertiefungen geschaffen werden muss. Hierzu sind präzise und aufwändig auszuführende Arbeitsschritte erforderlich. Auch eine farbige Gestaltung der Bezeichnung ist nicht ermöglicht.

Üblich sind auch Bezeichnungen auf der Seitenwand von Fahrzeugreifen. Die Bezeichnungen werden beispielsweise durch das Aufbringen von Vulkanetten auf der Reifenseitenwand erreicht. Als Werkstoffe der Vulkanetten kommen beispielsweise Elastomere, thermoplastische Elastomere, Kunststoffe oder Kombinationen im schichtweisen Aufbau aus Elastomeren und bedruckten Kunststoffen in Frage. Den gestanzten Vulkanetten kommt eine herausragende Bedeutung zu.

Die Vulkanetten werden unter Einwirkung von Druck und Wärme auf den zu kennzeichnenden Reifen gepresst und härten oder vulkanisieren an bzw. auf dem Reifen aus. Die Vulkanetten tragen in der Regel Bezeichnungen wie farbige, aufgedruckte Schriften, Zeichen, Logos, technische Informationen, Markennamen oder dergleichen.

Aus der EP 1 625 952 A1 ist es bekannt, die Reifenseitenwand mit Vulkanetten zu versehen. Die Vulkanetten weisen eine Stärke von etwa 1 mm auf und sind durch auf die Seitenwand des Reifens vulkanisierte Gummifolien gebildet. Der Folienstärkebereich bewegt sich zumeist zwischen 0,1 und 1,5 mm. Die Vulkanetten werden mittels Klebeschicht auf dem Reifenrohling positioniert und dann in einer Heizform gemeinsam mit dem Rohling vulkanisiert. Nachteilig ist allerdings, dass an der Reifenseitenwand eine exakte Positionierung der Vulkanette, insbesondere relativ zu weiteren auf der Seitenwand positionierten Bezeichnungen, gewünscht ist. Eine solche vorgegebene Position der Vulkanette ist auf der Reifenseitenwand allerdings nicht exakt einzuhalten.

Verschiedene Anstrengungen wurden bereits zur Lösung dieses Problems unternommen. So offenbaren die DE 10 2007 028 192 A1 und die DE 10 2009 044 800 A1 jeweils eine Vulkanisierform, welche eine Aussparung in der Seitenwandschale zur Aufnahme der Vulkanette aufweist. Hierdurch kann eine vorgegebene Position der Vulkanette an der Reifenseitenwand präziser eingehalten werden. Allerdings sind solche speziellen Seitenwandschalen kostenintensiv in der Herstellung.

Oftmals ist es auch erwünscht, Vulkanetten beidseitig auf den Reifenseitenwänden anzuordnen. Hierdurch kann, insbesondere bei symmetrischen PKW- oder LKW- Reifen, die Sichtbarkeit der Vulkanette unabhängig von der Reifenposition am Fahrzeug sichtbar erhalten bleiben. Allerdings muss hierdurch die doppelte Anzahl an Vulkanetten aufgebracht werden, was den Arbeitsaufwand und die Kosten in der Herstellung der Reifen erhöht. Zudem ist eine übliche Vulkanisierform so orientiert, dass die Achse des heizzupressenden Reifens vertikal verläuft. Der Reifenrohling ist somit in vertikaler Richtung zwischen einer "unteren" Seitenwandschale und einer "oberen" Seitenwandschale angeordnet. Problematisch ist nun, die Vulkanette derart an der nach unten weisenden "oberen" Seitenwandschale anzuordnen, dass die Vulkanette gegen Abfallen durch die Schwerkraft gesichert, gleichzeitig aber zur Übertragung auf den Reifen lösbar angeordnet, ist. Hierzu sind aufwändige weitere Maßnahmen nötig. Beispielsweise offenbart die DE 10 2011 051 856 A1 eine Vulkanette, die mittels magnetischer Kräfte auf der Seitenwandschale lösbar anzuordnen ist.

Nachteilig an einer Vulkanette auf der Reifenseitenwand ist jedoch auch, dass durch die Dicke der Vulkanette, welche üblicherweise 0,1 mm und 1,5 mm beträgt, die Materialstärke der axial außerhalb von Festigkeitsträgern angeordneten Seitenwandgummierung, welche beispielsweise bei Fahrzeugluftreifen für Personenkraftwagen üblicherweise 1 mm bis 4 mm beträgt, lokal stark verringert ist. Bei einem etwaigen, z.B. alterungsbedingten, Ablösen der Vulkanette ist somit die Seitenwand geschwächt, wodurch es zu Haltbarkeitsproblemen kommen kann.

Die EP 2921322 A2 offenbart ein Herstellungsverfahren eines Reifens aufweisend einen mehrschichtigen Verschleißindikator. Hierbei wird der Verschleißindikator in eine Tasche in der Lauffläche des vulkanisierten Reifens eingesteckt.

Aufgabe der vorliegenden Erfindung ist es somit, ein Herstellungsverfahren für einen Fahrzeugreifen mit einer Vulkanette zur Verfügung zu stellen, welche unabhängig von der Position des Reifens am Fahrzeug sichtbar ist, wobei der Fahrzeugreifen kostengünstiger in seiner Herstellung sein und eine verbesserte Haltbarkeit aufweisen soll.

Die erfindungsgemäße Lösung dieser Aufgabe umfasst ein erstes Verfahren und ein zweites Verfahren zur Herstellung eines vorteilhaften Fahrzeugreifens, insbesondere eines Fahrzeugluftreifens, aufweisend eine Vulkanette auf der Oberfläche seines Laufstreifens. Hierbei wird ein Reifenrohling umfassend einen unvulkanisierten Laufstreifen formgebende in einer Vulkanisiereinrichtung vulkanisiert. Andere Bauteile des Reifenrohlings können unvulkanisiert oder teilvulkanisiert oder vulkanisiert sein.

Ein erstes Herstellungsverfahren umfasst zumindest die folgenden Schritte:
a) Bereitstellen eines unvulkanisierten Laufstreifens;
b) Bereitstellen eines Reifenrohlings;
c) Positionieren der Vulkanette auf der äußeren Oberfläche des unvulkanisierten Laufstreifens;
d) Bereitstellen eines Formwerkzeugs zur Formgebung des Laufstreifens;
e) Formgebung des Laufstreifens durch das Formwerkzeug;
f) Vulkanisation der Vulkanette und des Reifens in einer Vulkanisiereinrichtung umfassend das Formwerkzeug zur Formgebung des Laufstreifens.

Die Vulkanette wird also direkt auf den unvulkanisierten Laufstreifen des Reifenrohlings aufgebracht. Hierbei kann eine Klebeverbindung die vorläufige Verbindung zwischen Vulkanette und Laufstreifen verbessern. Der Reifenrohling aufweisend die Vulkanette wird weiter in einer Vulkanisiereinrichtung umfassend das Formwerkzeug zur Formgebung des Laufstreifens vulkanisiert. Hierdurch kann eine Vulkanisationsverbindung zwischen Vulkanette und dem die Vulkanette umgebenden Laufstreifenmaterial entstehen, wodurch die Vulkanette fest mit dem restlichen Laufstreifen verbunden ist.

Die Haltbarkeit des Reifens ist nur geringfügig von der lokalen Variation der Materialstärke des die Vulkanette umgebenden Laufstreifenmaterials durch die Vulkanette beeinflusst. Im Gegensatz zu einer Vulkanette in der Oberfläche der Seitenwand eines Fahrzeugluftriefens ist die Haltbarkeit eines Reifens bei einer etwaigen Ablösung der Vulkanette verbessert. Weiterhin ist im Vergleich zu einer Anbringung von Vulkanetten auf beiden Seitenwänden der Materialaufwand und der Herstellungsaufwand des Reifens verringert.

Ein zweites Herstellungsverfahren umfasst die folgenden Schritte:
a) Bereitstellen eines unvulkanisierten Laufstreifens;
b) Bereitstellen eines Reifenrohlings;
c) Bereitstellen eines Formwerkzeugs zur Formgebung des unvulkanisierten Laufstreifens, wobei das Formwerkzeug eine Aussparung zur Aufnahme der Vulkanette aufweist;
d) Positionieren der Vulkanette in der Aussparung;
e) Formgebung des Laufstreifens durch das Formwerkzeug, wobei die Vulkanette mit der äußeren Oberfläche des Laufstreifens in Kontakt kommt;
f) Vulkanisation der Vulkanette und des Reifens in einer Vulkanisiereinrichtung umfassend das Formwerkzeug zur Formgebung des Laufstreifens.

Die Vulkanette wird also in der Aussparung des Formwerkzeugs positioniert und im Zuge der Formgebung mit dem Laufstreifen in Kontakt gebracht. Bei der Vulkanisation wird die Vulkanette fest mit dem restlichen Reifen verbunden. Die Anordnung der Vulkanette in der Aussparung ermöglicht eine sehr genaue Positionierung und Ausrichtung der Vulkanette am Laufstreifen. Bei der Anordnung der Vulkanette an einer im Wesentlichen in vertikaler Richtung orientierten Fläche des Formwerkzeugs ist eine einfachere Anbringung der Vulkanette als an einer nach unten orientierten Oberfläche eines Formwerkzeugs ermöglicht.

Die "äußere Oberfläche" des Fahrzeugreifens ist dabei eine Oberfläche des Fahrzeugreifens, die ein Rad, aufweisend eine Felge und den auf der Felge montierten Fahrzeugreifen, nach außen mit begrenzt. Der Fahrzeugreifen weist einen Laufstreifen auf. Der Laufstreifen kann mit Profilrillen ausgebildet sein. Die äußere Oberfläche des Fahrzeugreifens wird zumindest teilweise von einer Oberfläche des Laufstreifens gebildet. Zu dieser Oberfläche des Laufstreifens und damit auch zur äußeren Oberfläche des Fahrzeugreifens können unter anderem eine Lauffläche des Laufstreifens und gegebenenfalls der Grund und die Flanken einer Profilrille des Laufstreifens zählen.

Die "Lauffläche" bildet einen Teil der Oberfläche des Laufstreifens, die die äußere Oberfläche des Fahrzeugreifens mitbildet. Die Lauffläche kommt ganz oder teilweise im Fahrbetrieb mit der Fahrbahn in Berührung. Die Lauffläche zählt somit zu den radial äußersten Oberflächenbereichen des Fahrzeugreifens. Die Lauffläche kann einen Teil einer Hüllfläche, welche von außen an den Reifen angelegt wird, bilden. Vertiefungen oder Absenkungen der Oberfläche des Laufstreifens, z.B. durch Profilrillen, tragen nicht zur Lauffläche bei. Die Lauffläche ist insbesondere axial innerhalb der Gürtelkanten angeordnet.

Die Oberfläche des Laufstreifens weist die Vulkanette auf. Die Oberfläche des Laufstreifens ist somit zumindest teilweise durch eine Oberfläche der Vulkanette gebildet.

Der Laufstreifen des Fahrzeugreifens weist somit auf seiner die äußere Oberfläche des Fahrzeugreifens mitbildenden Oberfläche die Vulkanette auf. Die Vulkanette ist ein dreidimensionales Objekt. Im Bereich der Vulkanette ist somit die Materialstärke des jeweiligen die Vulkanette umgebenden Laufstreifenmaterials lokal verringert. Die Materialstärke des Laufstreifens ist allerdings in der Regel größer als die Materialstärke einer Seitenwandgummierung. Zudem ist bei einem Fahrzeugreifen in der Regel radial innerhalb des Laufstreifens zusätzlich zu einer Karkasse ein Gürtel aufweisend Festigkeitsträger angeordnet, welcher dem Reifen zusätzlich Stabilität gegenüber einer lokalen Verringerung der Materialstärke verleiht. Es hat sich gezeigt, dass die Haltbarkeit des Laufstreifens robuster gegenüber einer solchen lokalen Verringerung der Materialstärke des Gummimaterials ist, als eine Seitenwand eines Fahrzeugluftreifens. Bei einer etwaigen Ablösung der Vulkanette ist somit die Haltbarkeit eines Fahrzeugluftreifens, dessen äußere Oberfläche aufweisend die Vulkanette eine Oberfläche des Laufstreifens und nicht eine Oberfläche der Seitenwand ist, durch eine mit der Ablösung verbundenen Verringerung der Materialstärke des Laufstreifens kaum beeinflusst. Die Haltbarkeit eines solchen Fahrzeugreifens ist somit verbessert.

Gleichzeitig kann im Bereich des Laufstreifens die Präzision von Positionierung und Ausrichtung der Vulkanette im Vergleich zur Seitenwand verringert werden. Hierdurch sind aufwändige und kostenintensive Maßnahmen zur präzisen Positionierung und Ausrichtung der Vulkanette, beispielsweise durch eine darauf ausgerichtete Gestaltung des Formwerkzeugs einer Vulkanisiereinrichtung, nicht nötig und eine hohe Zykluszeit ist ermöglicht.

Ein weiterer Vorteil besteht darin, dass mit der Anordnung bereits einer einzigen Vulkanette auf der Oberfläche des Laufstreifens eine Bezeichnung auf dem Reifen ermöglicht ist, die unabhängig von der Anordnung des Reifens am Fahrzeug sichtbar und somit z.B. mittels eines elektronischen Lesegeräts auslesbar ist. Hierdurch ist der Materialaufwand sowie der Aufwand in der Herstellung verringert.

Vorteilhaft ist dabei auch, dass die Vulkanette auch dann sichtbar ist, wenn vorrangig der Laufstreifen des Fahrzeugreifens sichtbar ist. Dies ist z.B. bei dem mittleren Reifen bei einer Drillingsbereifung oder bei gestapelten Reifen, wie z.B. in einer Werkstatt oder im Werk, oder bei aufrecht nebeneinander angeordneten Reifen, wie z.B. bei einem Reifenhändler in der Verkaufsausstellung, der Fall.

Gleichzeitig hat der Verzicht auf das beidseitige Anbringen der Vulkanetten einen weiteren Vorteil. Die den Laufstreifen pressende Oberfläche des Formwerkzeugs der Vulkanisiereinrichtung verlaufen üblicherweise weitgehend in vertikale Richtung. Die Anordnung einer Vulkanette auf bzw. an einer solchen weitgehend in vertikale Richtung weisenden Oberfläche eines Formwerkzeugs ist weit weniger aufwändig als an einer nach unten weisenden "oberen" Seitenwandschale. Eine spezielle Gestaltung des Vulkanettenmaterials sowie aufwändige Prozessmaßnahmen sind somit nicht notwendig.

Somit sind zwei Herstellungsverfahren für einen Fahrzeugreifen mit einer Vulkanette zur Verfügung gestellt, welche unabhängig von der Position des Reifens am Fahrzeug sichtbar ist, wobei der Fahrzeugreifen wenig aufwändiger und kostengünstiger in seiner Herstellung ist und zudem eine verbesserte Haltbarkeit aufweist.

In einer bevorzugten Ausführungsform weist die Vulkanette eine Bezeichnung, insbesondere einen optoelektronisch lesbaren Code, auf. Hierdurch ist ein einfaches Anbringen und Auslesen von Information ermöglicht. Insbesondere ist die Bezeichnung bzw. der Code unabhängig von der Position des Reifens am Fahrzeug sichtbar und mittels eines optoelektronischen Lesegeräts auslesbar.

Unter einem "Code" kann hierbei die Abbildungen von Daten in Symbolen verstanden werden. Ein "optoelektronisch lesbarer" Code kann durch ein optoelektronisches Lesegerät erfasst und mittels entsprechender Software decodiert und interpretiert werden.

Das "optoelektronische Lesegerät" umfasst zumindest einen Detektor für Licht. Als optoelektronisches Lesegerät kann ein Lesegerät dienen, welches, wie beispielsweise ein Strichcodescanner, aktiv Licht aussendet und das in den Detektor zurückreflektierte Licht detektiert. Es kann sich auch um ein optoelektronisches Lesegerät handeln, das, wie beispielsweise ein mit einer Fotooptik und einer geeigneten Software ausgestattetes Smartphone, Licht detektiert, das von der Oberfläche der Vulkanette in den Detektor reflektiert wird. Das Licht kann vom Lesegerät ausgesandt werden. Eine externe oder eine in das optoelektronische Lesegerät integrierte Interpretationssoftware decodiert und interpretiert die mittels des optoelektronisch lesbaren Codes dargestellte Information. Detektionsmechanismus und Interpretationssoftware können auf die Anforderungen des in die Laufstreifenoberfläche integrierten optoelektronisch lesbaren Codes abgestimmt sein.

Zweckmäßig ist es, wenn der optoelektronisch lesbare Code ein zweidimensionaler Code, bevorzugt ein quick-resoponse (QR-) Code ist. Bei den zweidimensionalen Codes sind auch gestapelte Codes wie der Codablock, Code 49 und PDF417, sowie Matrix Codes wie QR-Codes, der DataMatrix Code, MaxiCode und Aztec-Code, sowie Punktcodes zu nennen. QR-Codes umfassen auch Weiterentwicklungen wie den Design-QR-Code, Micro-QR-Code, Secure-QR-Code und iQR-Code. Zweckmäßig ist es auch, wenn der optoelektronisch lesbare Code ein eindimensionaler Code, bevorzugt ein Strichcode, ist.

In einer bevorzugten Ausführungsform weist eine Lauffläche des Laufstreifens, bevorzugt eine Lauffläche eines Profilblocks des Laufstreifens, die Vulkanette auf.

Die Vulkanette kann dabei ganz oder teilweise im Bereich der Lauffläche angeordnet sein. Eine solche Vulkanette weist somit insbesondere am Neureifen eine gute Lesbarkeit auf. Dies ermöglicht, z.B. bei der Lagerung oder beim Händler im Verkauf, eine gute Sichtbarkeit der Bezeichnung und gegebenenfalls ein besonders schnelles und einfaches Lesen der Bezeichnung, insbesondere mittels eines optoelektronischen Lesegerätes.

Weist der Laufstreifen eine Einteilung in Profilblöcke auf, so ist es zweckmäßig, wenn die Vulkanette ganz oder teilweise auf der Lauffläche eines Profilblocks angeordnet ist. Somit ist die gesamte auf einer Vulkanette angeordnete Bezeichnung innerhalb der Lauffläche des Profilblocks angeordnet. Ein "Profilblock" kann durch eine oder zwei Umfangsrillen und/oder durch eine oder mehrere Querrillen begrenzt sein. Der Laufstreifen kann aber auch keine Profilrillen oder Profilblöcke aufweisen.

Zweckmäßig ist es, wenn der Bereich der Oberfläche, auf der die Vulkanette angeordnet ist, zusammenhängend ausgebildet ist.

Zweckmäßig ist es, wenn es sich bei dem Reifen um einen Neureifen handelt. Bei einem Neureifen bzw. einem noch nicht oder kaum abgefahrenen Laufstreifen ist eine auf der Lauffläche angeordnete Vulkanette besonders gut sichtbar.

Vorteilhaft ist es, wenn die Vulkanette ganz oder teilweise axial innerhalb der Gürtelkanten angeordnet ist.

Vorteilhaft ist es aber auch, wenn die Vulkanette ganz oder teilweise axial außerhalb der Gürtelkanten angeordnet ist. In diesem Bereich ist der Abrieb im Fahrbetrieb besonders gering, so dass die Haltbarkeit der Vulkanette über eine besonders lange Nutzungsdauer ermöglicht ist.

Die Haltbarkeit der Vulkanette umfasst dabei z.B. die Haltbarkeit des die Bezeichnung bildenden Bereichs der Vulkanette.

Für einen besonders lange Haltbarkeit der Vulkanette auch bei Abnutzung des Laufstreifens ist es vorteilhaft, wenn der Laufstreifen einen im Vergleich zur Lauffläche abgesenkten Oberflächenbereich, bevorzugt einen Oberflächenbereich einer Profilrille, aufweist und wenn die Vulkanette ganz oder teilweise innerhalb des abgesenkten Oberflächenbereichs angeordnet ist.

Weist der Laufstreifen eine Profilrille mit einem Rillengrund auf, so kann eine Anordnung der Vulkanette im Rillengrund vorteilhaft sein. Hierdurch ist ein besonders gute Haltbarkeit und Sichtbarkeit der Vulkanette selbst bei großem Abrieb ermöglicht. Besonders gute Ergebnisse lassen sich erzielen, wenn die Profilrille eine Breite von mindestens 8 mm aufweist.

In einer weiteren vorteilhaften Ausführungsform weist die Vulkanette in Umfangsrichtung eine Länge von maximal 200 mm auf.

Die Erfindung eignet sich sowohl für einteilige Laufstreifen als auch für mehrteilige Laufstreifen. Mehrteilige Laufstreifen können eine Cap und eine Base aufweisen.

Die genannten Vorteile ergeben sich sowohl für Vollreifen als auch für Fahrzeugluftreifen. Am Fahrzeug ist die von der Position des Reifens am Fahrzeug unabhängige Sichtbarkeit der Vulkanette durch die Anordnung der Vulkanette am Laufstreifen vor allem für Reifen in Zwillings- oder Drillingsanordnung, für Motorradreifen und für symmetrische Reifen von Bedeutung. Bevorzugt handelt es sich bei dem Reifen um einen Fahrzeugluftreifen. Hierbei ergeben sich besonders große Vorteile in einer Verbesserung der Haltbarkeit durch die Anordnung der Vulkanette auf dem Laufstreifen. Besonders bevorzugt handelt es sich um einen Fahrzeugluftreifen für einen Personenkraftwagen oder einen Lastkraftwagen.

Ein Formwerkzeug einer Vulkanisiereinrichtung kann derart ausgebildet sein, dass das Formwerkzeug eine Aussparung zur Aufnahme einer Vulkanette aufweist, wobei das Formwerkzeug zur Formgebung des Laufstreifens ausgebildet ist. Ein solches Formwerkzeug eignet sich hervorragend als Formwerkzeug für die vorangehend geschilderte zweite Verfahren. Mittels eines solchen Formwerkzeugs können auf einfache Art und Weise erfindungsgemäße Laufstreifen bzw. Reifen hergestellt werden.

Weitere Merkmale, Vorteile und Einzelheiten der Erfindung werden nun anhand der schematischen Zeichnungen, die Ausführungsbeispiele darstellen, näher erläutert. Dabei zeigt die
Fig. 1 einen radialen Querschnitt durch einen erfindungsgemäßen Fahrzeugluftreifen;
Fig. 2 eine Draufsicht auf einen Laufstreifen eines erfindungsgemäßen Fahrzeugreifens;
Fig. 3 eine Draufsicht auf einen Laufstreifen eines erfindungsgemäßen Fahrzeugreifens;
Fig. 4 einen Querschnitt durch eine Profilrille eines erfindungsgemäßen Fahrzeugreifens;
Fig. 5 einen Querschnitt durch einen Reifenrohling mit unvulkanisiertem Laufstreifen;
Fig. 6 einen Querschnitt durch ein Formwerkzeug.

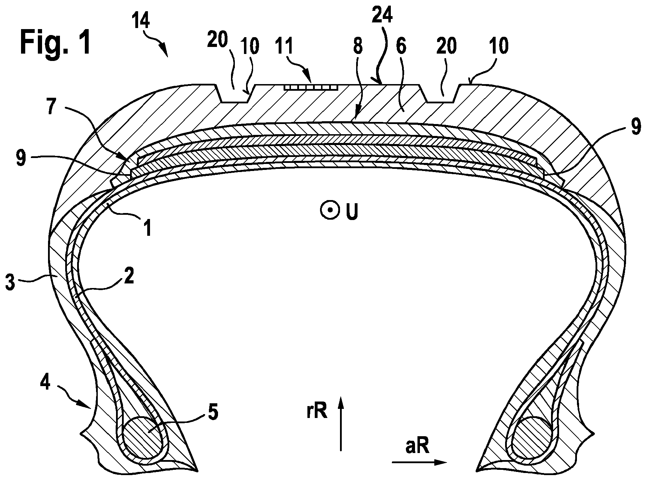

Die in den Figuren 1 bis 4 dargestellten Fahrzeugluftreifen 14 bzw. Laufstreifen 6 aufweisend die Vulkanette 11 sind gemäß dem beschriebenen ersten Herstellungsverfahren oder dem beschriebenen zweiten Herstellungsverfahren hergestellt.

Die Figur 1 zeigt einen radialen Querschnitt durch einen Fahrzeugluftreifen 14 für einen Personenkraftwagen. Die Erfindung ist aber auch auf andere Fahrzeugluftreifen oder auf Vollreifen anwendbar. Die wesentlichen Bauteile, aus welchen sich der dargestellte Fahrzeugluftreifen 14 zusammensetzt, sind eine weitgehend luftundurchlässige Innenschicht 1, eine zumindest eine Festigkeitsträgerlage aufweisende Karkasse 2, die in herkömmlicher Weise vom Zenitbereich des Fahrzeugluftreifens über die Seitenwände 3 bis in die Wulstbereiche 4 reicht und dort durch Umschlingen zugfester Wulstkerne 5 verankert ist. Weitere wesentliche Bauteile sind ein radial außerhalb der Karkasse 2 befindlicher profilierten Laufstreifen 6 und einen zwischen dem Laufstreifen 6 und der Karkasse 2 angeordneten, zwei Festigkeitsträgerlagen beinhaltenden Gürtel 7 mit zwei Gürtelkanten 9, welcher radial außen mit einer Gürtelbandage 8 abgedeckt ist.

Der Fahrzeugreifen 14 weist eine äußere Oberfläche auf, welche eine Vulkanette 11 aufweist. Die äußere Oberfläche aufweisend die Vulkanette 11 ist dabei eine Oberfläche 10 des Laufstreifens 6. Es kann sich um einen Neureifen handeln.

Ohne Beschränkung der Allgemeinheit ist in der Figur 1 die Vulkanette 11 ganz oder teilweise im Bereich einer Lauffläche 24 des Laufstreifens 6 angeordnet. Die Lauffläche 24 kommt beim Betrieb des Reifens ganz oder teilweise mit der Fahrbahn in Kontakt. Die Vulkanette 11 ist dabei axial innerhalb der Gürtelkanten 9 angeordnet. Der Vulkanette 12 kann auch ganz oder teilweise axial außerhalb der Gürtelkanten 9 angeordnet sein. Der dargestellte Reifen 14 weist Profilrillen 20 auf.

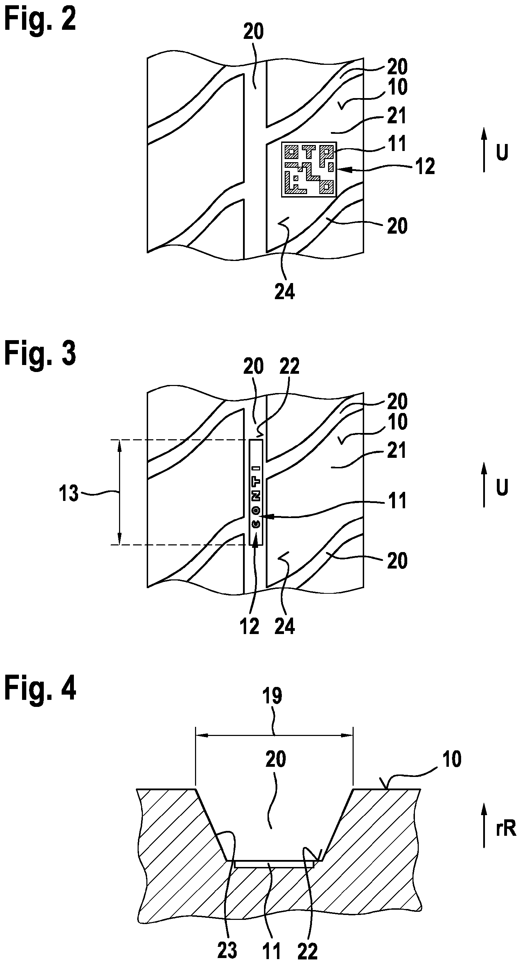

Die Figur 2 bis Figur 4 zeigen jeweils ein Beispiel für die Anordnung einer Vulkanette 11 an der Oberfläche 10 eines Laufstreifens 6. Der Laufsteifen 6 kann der Laufsteifen eines Fahrzeugluftreifens gemäß Figur 1 sein. Der Laufstreifen 6 kann auch ein Laufstreifen 6 für einen runderneuerten Reifen sein. Der Laufstreifen 6 kann auch ein Laufstreifen 6 eines Vollreifens sein.

Die Figur 2 zeigt eine Draufsicht auf einen Laufstreifen 6 aufweisend Profilrillen 20. Die Profilrillen 20 begrenzen einen Profilblock 21. Die Vulkanette 11 ist ganz oder teilweise auf der Lauffläche 24 des Profilblocks 21 angeordnet. Die Vulkanette 11 weist als Bezeichnung 12 einen optoelektronisch lesbaren Code auf. Es kann sich dabei um einen QR-Code handeln.

Die Figur 3 zeigt eine weitere Draufsicht auf einen Laufstreifen 6 aufweisend Profilrillen 20. Die Profilrillen 20 bilden einen im Vergleich zur Lauffläche 24 abgesenkten Oberflächenbereich 22, 23. Der abgesenkte Oberflächenbereich 22, 23 weist die Vulkanette 11 ganz oder teilweise auf. Die Profilrille 20 ist eine Umfangsrille. Die Vulkanette 11 weist in Umfangsrichtung U eine Länge 13 von maximal 200 mm auf. Die Vulkanette 11 weist eine Bezeichnung 12 mit Schriftzeichen auf.

Die Figur 4 zeigt einen Querschnitt durch einen Laufstreifen 6 aufweisend eine Profilrille 20 als abgesenkten Oberflächenbereich mit einem Rillengrund 22 und einer Rillenflanke 23. Die Vulkanette 11 ist ganz oder teilweise im Bereich des Rillengrunds 22 angeordnet. Die Breite 19 der Rille kann mindestens 8 mm betragen. Es kann sich dabei um die in der Figur 3 gezeigte Profilrille 20 handeln.

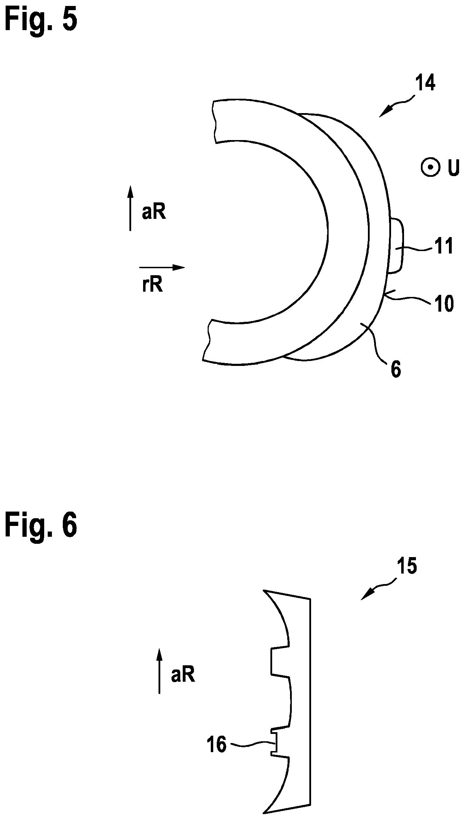

Die Figur 5 zeigt einen Reifenrohling 14 aufweisend einen unvulkanisierten Laufstreifen 6. Gemäß dem ersten Herstellungsverfahren ist eine Vulkanette 11 auf der Oberfläche 10 des unvulkanisierten Laufstreifens 6 positioniert. In nachfolgenden Schritten werden Vulkanette 11 und Reifen 14 formgebend in einer Vulkanisiereinrichtung vulkanisiert. Wie in einer Vulkanisiereinrichtung üblich ist der Reifenrohling 14 so angeordnet, dass seine Achse in vertikaler Richtung verläuft.

Die Figur 6 zeigt ein Formwerkzeug 15 zur Formgebung des Laufstreifens 6 für eine Vulkanisiereinrichtung. Das Formwerkzeug 15 weist gemäß dem zweiten Herstellungsverfahren eine Aussparung 16 zur Aufnahme der Vulkanette 11 auf. Die Aussparung 16 ist in einem zur Formung eines Rillengrundes geeigneten Oberflächenbereichs des Formwerkzeugs 15 angeordnet. In der Vulkanisiereinrichtung ist das Formwerkzeug 15 in der Regel so angeordnet, dass die den Laufstreifen pressende Oberfläche des Formwerkzeugs weitgehend in vertikale Richtung verläuft. Auch eine in der Aussparung 16 angeordnete Vulkanette erstreckt sich weitgehend in vertikaler Richtung.

### Bezugszeichenliste

(Teil der Beschreibung)
- 1: Innenschicht
- 2: Karkasse
- 3: Seitenwand
- 4: Wulstbereich
- 5: Wulstkern
- 6: Laufstreifen
- 7: Gürtel
- 8: Gürtelbandage
- 9: Gürtelkante
- 10: Oberfläche des Laufstreifens
- 11: Vulkanette
- 12: Bezeichnung
- 13: Länge
- 14: Reifen
- 15: Formwerkzeug
- 16: Aussparung
- 19: Breite
- 20: Profilrille
- 21: Profilblock
- 22: Rillengrund
- 23: Rillenflanke
- 24: Lauffläche

## Patentansprüche

1. Verfahren zur Herstellung eines Fahrzeugreifens (14), wobei der Fahrzeugreifen (14) eine äußere Oberfläche aufweist, wobei die äußere Oberfläche eine Oberfläche (10) eines Laufstreifens (6) aufweist, wobei die Oberfläche (10) des Laufstreifens eine Vulkanette aufweist, wobei das Verfahren zumindest die folgenden Schritte aufweist:
a) Bereitstellen eines unvulkanisierten Laufstreifens (6);
b) Bereitstellen eines Reifenrohlings;
c) Positionieren der Vulkanette (11) auf der Oberfläche (10) des unvulkanisierten Laufstreifens (6);
d) Bereitstellen eines Formwerkzeugs (15) zur Formgebung des Laufstreifens (6);
e) Formgebung des Laufstreifens (6) durch das Formwerkzeug (15);
f) Vulkanisation der Vulkanette (11) und des Reifens in einer Vulkanisiereinrichtung umfassend das Formwerkzeug (15) zur Formgebung des Laufstreifens (6).

2. Verfahren zur Herstellung eines Fahrzeugreifens (14), wobei der Fahrzeugreifen (14) eine äußere Oberfläche aufweist, wobei die äußere Oberfläche eine Oberfläche (10) eines Laufstreifens (6) aufweist, wobei die Oberfläche (10) des Laufstreifens eine Vulkanette aufweist, wobei das Verfahren zumindest die folgenden Schritte aufweist:
a) Bereitstellen eines unvulkanisierten Laufstreifens (6);
b) Bereitstellen eines Reifenrohlings;
c) Bereitstellen eines Formwerkzeugs (15) zur Formgebung des unvulkanisierten Laufstreifens (6), wobei das Formwerkzeug (15) eine Aussparung (16) zur Aufnahme der Vulkanette (11) aufweist;
d) Positionieren der Vulkanette (11) in der Aussparung (16);
e) Formgebung des Laufstreifens (6) durch das Formwerkzeug (15), wobei die Vulkanette (11) mit der Oberfläche (10) des Laufstreifens (6) in Kontakt kommt;
f) Vulkanisation der Vulkanette (11) und des Reifens in einer Vulkanisiereinrichtung umfassend das Formwerkzeug (15) zur Formgebung des Laufstreifens (6).

3. Verfahren zur Herstellung eines Fahrzeugreifens (14) nach Anspruch 1 oder 2, wobei sich der Fahrzeugreifen (14) dadurch auszeichnet, dass die Vulkanette (11) eine Bezeichnung (12), insbesondere einen optoelektronisch lesbaren Code, aufweist.

4. Verfahren zur Herstellung eines Fahrzeugreifens (14) nach einem der vorhergehenden Ansprüche, wobei sich der Fahrzeugreifen (14) dadurch auszeichnet, dass eine Lauffläche (24) des Laufstreifens (6), bevorzugt eine Lauffläche (24) eines Profilblocks (21) des Laufstreifens (6), die Vulkanette (11) aufweist.

5. Verfahren zur Herstellung eines Fahrzeugreifens (14) nach einem der vorhergehenden Ansprüche, wobei sich der Fahrzeugreifen (14) dadurch auszeichnet, dass die Vulkanette (11) ganz oder teilweise axial innerhalb der Gürtelkanten (9) angeordnet ist.

6. Verfahren zur Herstellung eines Fahrzeugreifens (14) nach einem der Ansprüche 1 bis 4, wobei sich der Fahrzeugreifen (14) dadurch auszeichnet, dass die Vulkanette (11) ganz oder teilweise axial außerhalb der Gürtelkanten (9) angeordnet ist.

7. Verfahren zur Herstellung eines Fahrzeugreifens (14) nach einem der vorhergehenden Ansprüche, wobei sich der Fahrzeugreifen (14) dadurch auszeichnet, dass der Laufstreifen (6) einen im Vergleich zur Lauffläche (24) abgesenkten Oberflächenbereich (22, 23), bevorzugt einen Oberflächenbereich (22, 23) einer Profilrille (20), aufweist und dass der abgesenkte Oberflächenbereich (22, 23) die Vulkanette (11) ganz oder teilweise aufweist.

8. Verfahren zur Herstellung eines Fahrzeugreifens (14) nach einem der vorhergehenden Ansprüche, wobei sich der Fahrzeugreifen (14) dadurch auszeichnet, dass die Vulkanette (11) in Umfangsrichtung U eine Länge (13) von maximal 200 mm aufweist.

## Claims

1. Method for producing a vehicle tyre (14), the vehicle tyre (14) having an outer surface, the outer surface comprising a surface (10) of a tread (6), the surface (10) of the tread having a vulcanette, the method comprising at least the following steps:
a) providing an unvulcanized tread (6);
b) providing a tyre blank;
c) positioning the vulcanette (11) on the surface (10) of the unvulcanized tread (6);
d) providing a mould (15) for moulding the tread (6);
e) moulding the tread (6) by the mould (15);
f) vulcanization of the vulcanette (11) and the tyre in a vulcanizing device comprising the mould (15) for moulding the tread (6).

2. Method for producing a vehicle tyre (14), the vehicle tyre (14) having an outer surface, the outer surface comprising a surface (10) of a tread (6), the surface (10) of the tread having a vulcanette, the method comprising at least the following steps:
a) providing an unvulcanized tread (6);
b) providing a tyre blank;
c) providing a mould (15) for moulding the unvulcanized tread (6), the mould (15) having a clearance (16) for receiving the vulcanette (11);
d) positioning the vulcanette (11) in the clearance (16) ;
e) moulding the tread (6) by the mould (15), the vulcanette (11) coming into contact with the surface (10) of the tread (6);
f) vulcanization of the vulcanette (11) and the tyre in a vulcanizing device comprising the mould (15) for moulding the tread (6).

3. Method for producing a vehicle tyre (14) according to Claim 1 or 2, the vehicle tyre (14) being distinguished by the fact that the vulcanette (11) has a designation (12), in particular an optoelectronically readable code.

4. Method for producing a vehicle tyre (14) according to one of the preceding claims, the vehicle tyre (14) being distinguished by the fact that a running surface (24) of the tread (6), preferably a running surface (24) of a profile block (21) of the tread (6), has the vulcanette (11).

5. Method for producing a vehicle tyre (14) according to one of the preceding claims, the vehicle tyre (14) being distinguished by the fact that the vulcanette (11) is entirely or partially arranged axially inside the belt edges (9).

6. Method for producing a vehicle tyre (14) according to one of Claims 1 to 4, the vehicle tyre (14) being distinguished by the fact that the vulcanette (11) is entirely or partially arranged axially outside the belt edges (9).

7. Method for producing a vehicle tyre (14) according to one of the preceding claims, the vehicle tyre (14) being distinguished by the fact that the tread (6) has a surface region (22, 23) that is lowered in comparison with the running surface (24), preferably a surface region (22, 23) of a profile groove (20), and that the lowered surface region (22, 23) entirely or partially has the vulcanette (11).

8. Method for producing a vehicle tyre (14) according to one of the preceding claims, the vehicle tyre (14) being distinguished by the fact that the vulcanette (11) has in the circumferential direction U a maximum length (13) of 200 mm.

## Revendications

1. Procédé de fabrication d'un pneumatique de véhicule (14), le pneumatique de véhicule (14) comportant une surface extérieure, la surface extérieure comportant une surface (10) d'une bande de roulement (6), la surface (10) de la bande de roulement comportant un élément de marquage vulcanisable, le procédé comportant au moins les étapes suivantes :
a) fournir une bande de roulement non vulcanisée (6) ;
b) fournir une ébauche de pneumatique ;
c) positionner l'élément de marquage vulcanisable (11) sur la surface (10) de la bande de roulement non vulcanisée (6) ;
d) fournir un outil de moulage (15) destiné à mouler la bande de roulement (6) ;
e) mouler la bande de roulement (6) à l'aide de l'outil de moulage (15) ;
f) vulcaniser l'élément de marquage vulcanisable (11) et le pneumatique dans un dispositif de vulcanisation comprenant l'outil de moulage (15) destiné à mouler la bande de roulement (6).

2. Procédé de fabrication d'un pneumatique de véhicule (14), le pneumatique de véhicule (14) comportant une surface extérieure, la surface extérieure comportant une surface (10) d'une bande de roulement (6), la surface (10) de la bande de roulement comportant un élément de marquage vulcanisable, le procédé comportant au moins les étapes suivantes :
a) fournir une bande de roulement non vulcanisée (6) ;
b) fournir une ébauche de pneumatique ;
c) fournir un outil de moulage (15) destiné à mouler la bande de roulement non vulcanisée (6), l'outil de moulage (15) comportant un évidement (16) destiné à recevoir l'élément de marquage vulcanisable (11) ;
d) positionner l'élément de marquage vulcanisable (11) dans l'évidement (16) ;
e) mouler la bande de roulement (6) à l'aide de l'outil de moulage (15), l'élément de marquage vulcanisable (11) venant en contact avec la surface (10) de la bande de roulement (6) ;
f) vulcaniser l'élément de marquage vulcanisable (11) et le pneumatique dans un dispositif de vulcanisation comprenant l'outil de moulage (15) destiné à mouler la bande de roulement (6).

3. Procédé de fabrication d'un pneumatique de véhicule (14) selon la revendication 1 ou 2, le pneumatique de véhicule (14) étant **caractérisé en ce que** l'élément de marquage vulcanisable (11) comporte une désignation (12), en particulier un code lisible de manière optoélectronique.

4. Procédé de fabrication d'un pneumatique de véhicule (14) selon l'une des revendications précédentes, le pneumatique de véhicule (14) étant **caractérisé en ce qu'**une surface de roulement (24) de la bande de roulement (6), de préférence une surface de roulement (24) d'un bloc de sculpture (21) de la bande de roulement (6), comporte l'élément de marquage vulcanisable (11).

5. Procédé de fabrication d'un pneumatique de véhicule (14) selon l'une des revendications précédentes, le pneumatique de véhicule (14) étant **caractérisé en ce que** l'élément de marquage vulcanisable (11) est disposé de manière entièrement ou partiellement axiale à l'intérieur des bords de ceinture (9).

6. Procédé de fabrication d'un pneumatique de véhicule (14) selon l'une des revendications 1 à 4, le pneumatique de véhicule (14) étant **caractérisé en ce que** l'élément de marquage vulcanisable (11) est disposé de manière entièrement ou partiellement axiale à l'extérieur des bords de ceinture (9).

7. Procédé de fabrication d'un pneumatique de véhicule (14) selon l'une des revendications précédentes, le pneumatique de véhicule (14) étant **caractérisé en ce que** la bande de roulement (6) comporte une zone de surface (22, 23) qui est abaissée par rapport à la surface de roulement (24), de préférence une zone de surface (22, 23) d'une rainure de sculpture (20), et **en ce que** la zone de surface abaissée (22, 23) comporte entièrement ou partiellement l'élément de marquage vulcanisable (11).

8. Procédé de fabrication d'un pneumatique de véhicule (14) selon l'une des revendications précédentes, le pneumatique de véhicule (14) étant **caractérisé en ce que** l'élément de marquage vulcanisable (11) a une longueur (13) de 200 mm maximum dans la direction circonférentielle U.
